# EUROPEAN PATENT APPLICATION

(11) **EP 2 782 000 A2**
(43) Date of publication of application: **24.09.2014**
(21) Application number: 14160167.4
(22) Date of filing: 16.03.2014
(51) Int. Cl.: G06F 3/0488

(54) **Alphanumeric keypad**

(30) Priority: 19.03.2013 US 201313847361
(71) Applicant: Honeywell International Inc., Morristown, NJ 07962-2245 (US)
(72) Inventor: Kawalkar, Amit Nishikant, Morristown, NJ New Jersey 07962-2245 (US)
(74) Representative: Houghton, Mark Phillip

(57) **Abstract**

A virtual keyboard for display on an avionics touch screen display comprises a first cluster of alphabetically sequential keys and a second cluster including alphabetically sequential keys, the second cluster separated from the first cluster. The virtual keyboard further comprises at least one visual marker between the first and second clusters.

## Description

### TECHNICAL FIELD

Embodiments described herein relate generally to alphanumeric keypads and, more particularly, to an alphanumeric keypad for small format touch screens of the type used in avionics display systems.

### BACKGROUND

It has been observed that in the context of small format touch screens, data entry using standard QWERTY keypads is more error prone than it is when using its large format counterparts. The primary reason for this more prevalent error rate is that QWERTY mandates a layout that comprises ten keys per row. Thus, in the case of small format touch screens in the portrait mode, the width of each individual key is no greater than approximately nine millimeters. This is significantly less than the minimum key size (i.e. approximately sixteen millimeters) associated with low target acquisition error rates. The problem is exacerbated in the case of small format touch screens deployed on aircraft (e.g. incorporated into flight avionics systems), especially when flying in turbulent conditions making data entry vulnerable to mistakes and the impact associated with improper data entry, the least of which is pilot frustration. This is understandable when one considers that known keypads such as QWERTY are designed for increased speed (e.g. words-per-minute) and larger keypads and not for improved accuracy, especially in turbulent conditions. One simple solution is to provide a sequential alphabetic keypad; however, such keypads, despite their simple layout, are difficult to use, especially in less than desirable conditions due to the crowded nature of the keypads. That is, locating a particular object in a tightly clustered arrangement of objects having largely identical features may be problematic.

In view of the foregoing, it would be desirable to provide a keypad that may be implemented with buttons that satisfy the minimum width requirement (i.e. 16mm) to reduce the data entry error rate. It would also be desirable to provide a keypad that significantly reduces the impact of environmental turbulence and employs a centric design that intuitively facilitates locating a desired alphabetic or numeric key, thus improving the data entry experience in a small format context such as that which exists in an avionics environment; i.e. touch screens that are 3.5-4.0 inches wide.

### BRIEF SUMMARY

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

The embodiments described herein arrange a keypad such that the alphabetic and numeric keys is arranged in a natural sequential order, wherein the entire group of keys are divided into smaller naturally sequential groups or clusters that provide a cognitive mapping to the alphabetic/numeric ranges present in the smaller groups. This is accomplished by means of a visual cueing or marking method that also provides a sense of orientation of the respective cluster with respect to the intended key. Thus, because there is a natural cognitive mapping of each spatially oriented cluster and alphabetic ranges, the user's natural ability to mentally associate the target key with a particular cluster is leveraged. This not only reduces the search time associated with finding a particular key and the effort associated therewith, but also reduces the target acquisition error rate.

In view of the forgoing, there is provided a virtual keyboard for display on an avionics display system touch screen, comprising a first cluster of alphabetically sequential keys, and a second cluster including alphabetically sequential keys, the second cluster separated from the first cluster.

There is also provided a method for reducing errors associated with entering data via a plurality of virtual input buttons on an avionics touch screen interface display having a top section, a mid-section, and a bottom. Alphabetic data is entered via first and second side-by-side groups of keys, each group comprising a stacked plurality of horizontal rows of virtual alphabetic keys, the first and second groups of alphabetic keys located in the top section. Numeric data is entered via first and second side-by-side groups of virtual numeric keys, each of the first and second groups of virtual numeric keys comprised of a stacked rows of numeric buttons located in the mid-section. The display is controlled by means of a plurality of virtual control keys located the bottom section of the display.

Further provided is a virtual keyboard for display on an avionics touch screen display having a top section, a mid-section, and a bottom and including virtual alphabetic, numeric, and control keys, comprising first and second five-row, side-by-side groups of virtual alphabetic keys, first and second two-row, side-by-side groups of virtual numeric keys, the first and second two-row groups located below the first and second five-row groups, and a plurality of virtual control keys positioned below the first and second two-row groups of virtual numeric keys.

### BRIEF DESCRIPTION OF THE DRAWINGS

A more complete understanding of the subject matter may be derived by referring to the detailed description and claims when considered in conjunction with the following figures, wherein like reference numbers refer to similar elements throughout the figures.
FIG. 1 is a block diagram of an aircraft cockpit display system including a touch screen display;
FIG. 2 illustrates an alphabetic keyboard in accordance with an embodiment;
FIG. 3 illustrates an alphabetic keyboard in accordance with a further embodiment;
FIG. 4 illustrates an alphabetic keyboard in accordance with a still further embodiment;
FIG. 5 illustrates an alphabetic keyboard in accordance with yet another embodiment;
FIG. 6 illustrates an alphabetic keyboard in accordance with a further embodiment;
FIG. 7 illustrates an alphabetic keyboard in accordance with a still further embodiment; and
FIG. 8 illustrates an alphabetic keyboard in accordance with yet another embodiment.

### DETAILED DESCRIPTION

The following detailed description is merely exemplary in nature and is not intended to limit the subject matter of the application and uses thereof. Furthermore, there is no intention to be bound by any theory presented in the preceding background or the following detailed description. Exemplary embodiments of the system and method may be used in various modes of transportation; for example, automobiles, trucks, ships, etc. In addition, presented herein for purposes of explication is a preferred embodiment an implementation in an aircraft. However, it should be appreciated that this explicated example embodiment is merely an example and a guide for implementing the novel system and method for displaying visual flight reference points. As such, the examples presented herein are intended as non-limiting.

Techniques and technologies may be described herein in terms of functional and/or logical block components and with reference to symbolic representations of operations, processing tasks, and functions that may be performed by various computing components or devices. It should be appreciated that any number of hardware, software, and/or firmware components configured to perform the specified functions may realize the various block components shown in the figures. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

The following description may refer to elements or nodes or features being "coupled" together. As used herein, unless expressly stated otherwise, "coupled" means that one element/node/feature is directly or indirectly joined to (or directly or indirectly communicates with) another element/node/feature, and not necessarily mechanically. Thus, although the drawings may depict one exemplary arrangement of elements, additional intervening elements, devices, features, or components may be present in an embodiment of the depicted subject matter. In addition, certain terminology may also be used in the following description for the purpose of reference only, and thus are not intended to be limiting.

For the sake of brevity, conventional techniques related to graphics and image processing, navigation, flight planning, aircraft controls, and other functional aspects of the systems (and the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

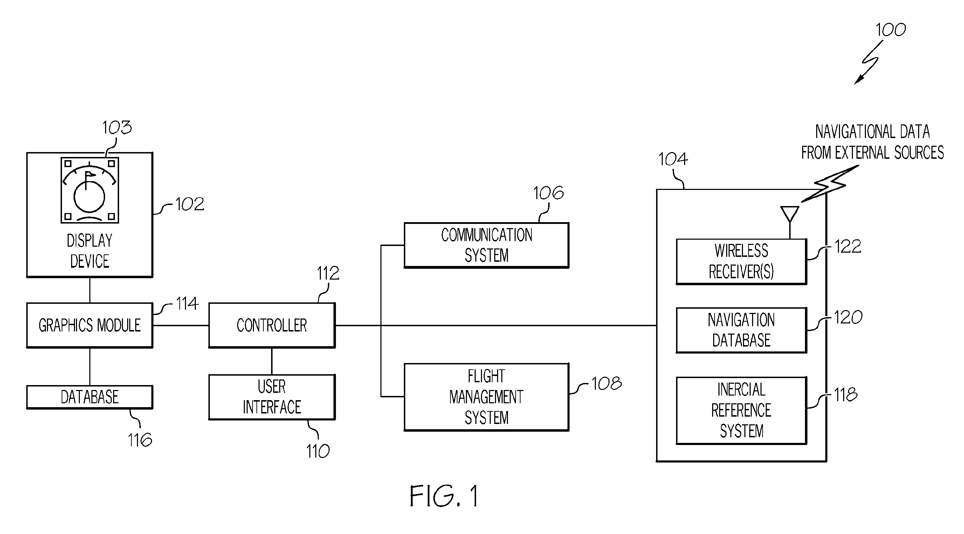

FIG. 1 depicts an exemplary embodiment of an aircraft display system 100. In an exemplary embodiment, the display system 100 includes, without limitation, a display device 102 for displaying a virtual keyboard 103, a navigation system 104, a communications system 106, a flight management system (FMS) 108, a controller 112, a graphics module 114, a user interface 110, and a database 116 suitably configured to support operation of the graphics module 114 and display device 102, as described in greater detail below. Navigation system 104 may include an inertial reference system 118, a navigation database 120 and one or more wireless receivers 122 for receiving navigational data from external sources in a well-known manner.

It should be understood that FIG. 1 is a simplified representation of a display system 100 for purposes of explanation and ease of description and is not intended to limit the application or scope of the subject matter in any way. In practice, the display system 100 and/or the aircraft will include numerous other devices and components for providing additional functions and features, as will be appreciated in the art. For example, the display system 100 and/or the aircraft may include one or more avionics systems (e.g., a weather system, an air traffic management system, a radar system, a traffic avoidance system) coupled to the flight management system 108 and/or the controller 112 for obtaining and/or providing real-time flight-related information that may be displayed on the display device 102.

In an exemplary embodiment, the display device 102 is coupled to the graphics module 114. The graphics module 114 is coupled to the processing architecture 112, and the processing architecture 112 and the graphics module 114 are cooperatively configured to display, render, or otherwise convey graphical representations or images of VRPs on the display device 102. As stated previously, navigational system 104 includes an inertial reference system 118, a navigation database 120, and at least one wireless receiver 122. Inertial reference system 118 and wireless receiver 122 provide controller 112 with navigational information derived from sources onboard and external to the host aircraft, respectively. More specifically, inertial reference system 118 provides controller 112 with information describing various flight parameters of the host aircraft (e.g., position, orientation, velocity, etc.) as monitored by a number of motion sensors (e.g., accelerometers, gyroscopes, etc.) deployed onboard the aircraft. By comparison, and as indicated in FIG. 1, wireless receiver 122 receives navigational information from various sources external to the aircraft. These sources may include various types of navigational aids (e.g., global position systems, non-directional radio beacons, very high frequency omni-directional radio range devices (VORs), etc.), ground-based navigational facilities (e.g., Air Traffic Control Centers, Terminal Radar Approach Control Facilities, Flight Service Stations, and control towers), and ground-based guidance systems (e.g., instrument landing systems). In certain instances, wireless receiver 122 may also periodically receive Automatic Dependent Surveillance-Broadcast (ADS-B) data from neighboring aircraft. In a specific implementation, wireless receiver 122 assumes the form of a multi-mode receiver (MMR) having global navigational satellite system capabilities.

Navigation database 120 includes various types of navigation-related data stored therein. In a preferred embodiment, navigation database 120 is an onboard database that is carried by the aircraft. The navigation-related data includes various flight plan related data such as, for example, and without limitation: locational data for geographical waypoints; distances between waypoints; track between waypoints; data related to different airports; navigational aids; obstructions; special use airspace; political boundaries; communication frequencies; and aircraft approach information.

Controller 112 is coupled to the navigation system 104 for obtaining real-time navigational data and/or information regarding operation of the aircraft to support operation of the display system 100. In an exemplary embodiment, the communications system 106 is coupled to the controller 112 and configured to support communications to and/or from the aircraft, as is appreciated in the art. The controller 112 is also coupled to the flight management system 108, which in turn, may also be coupled to the navigation system 104 and the communications system 106 for providing real-time data and/or information regarding operation of the aircraft to the controller 112 to support operation of the aircraft. In an exemplary embodiment, the user interface 110 is coupled to the controller 112, and the user interface 110 and the controller 112 are cooperatively configured to allow a user to interact with display device 102 and other elements of display system 100, as described in greater detail below.

In an exemplary embodiment, the display device 102 is realized as an electronic display configured to graphically display flight information or other data associated with operation of the aircraft under control of the graphics module 114. In an exemplary embodiment, the display device 102 is located within a cockpit of the aircraft. It will be appreciated that although FIG. 1 shows a single display device 102, in practice, additional display devices may be present onboard the aircraft. In an exemplary embodiment, the user interface 110 is also located within the cockpit of the aircraft and adapted to allow a user (e.g., pilot, co-pilot, or crew member) to interact with the remainder of display system 100 and enables a user to select content displayed on the display device 102, as described in greater detail below. In various embodiments, the user interface 110 may be realized as a keypad, touchpad, keyboard, mouse, touchscreen, joystick, knob, microphone, or another suitable device adapted to receive input from a user. In preferred embodiments, user interface 110 may be a touchscreen, cursor control device, joystick, or the like.

In an exemplary embodiment, the navigation system 104 is configured to obtain one or more navigational parameters associated with operation of the aircraft. The navigation system 104 may be realized as a global positioning system (GPS), inertial reference system (IRS), or a radio-based navigation system (e.g., VHF Omni-directional radio range (VOR) or long range aid to navigation (LORAN)), and may include one or more navigational radios or other sensors suitably configured to support operation of the navigation system 104, as will be appreciated in the art. In an exemplary embodiment, the navigation system 104 is capable of obtaining and/or determining the instantaneous position of the aircraft, that is, the current location of the aircraft (e.g., the latitude and longitude) and the altitude or above ground level for the aircraft. The navigation system 104 may also obtain and/or determine the heading of the aircraft (i.e., the direction the aircraft is traveling in relative to some reference).

In an exemplary embodiment, the communications system 106 is suitably configured to support communications between the aircraft and another aircraft or ground location (e.g., air traffic control). In this regard, the communications system 106 may be realized using a radio communication system or another suitable data link system. In an exemplary embodiment, the flight management system 108 (or, alternatively, a flight management computer) is located onboard the aircraft. Although FIG. 1 is a simplified representation of display system 100, in practice, the flight management system 108 may be coupled to one or more additional modules or components as necessary to support navigation, flight planning, and other aircraft control functions in a conventional manner.

The controller 112 and/or graphics module 114 are configured in an exemplary embodiment to display and/or render information pertaining to VRPs on the display device 102 to allow a user (e.g., via user interface 110) to review various aspects (e.g., estimated flight time, rates of ascent/descent, flight levels and/or altitudes, and the like) of the flight plan. The controller 112 generally represents the hardware, software, and/or firmware components configured to facilitate the display and/or rendering of a navigational map on the display device 102 and perform additional tasks and/or functions described in greater detail below. Depending on the embodiment, the controller 112 may be implemented or realized with a general purpose processor, a content addressable memory, a digital signal processor, an application specific integrated circuit, a field programmable gate array, any suitable programmable logic device, discrete gate or transistor logic, discrete hardware components, or any combination thereof, designed to perform the functions described herein. The controller 112 may also be implemented as a combination of computing devices, e.g., a combination of a digital signal processor and a microprocessor, a plurality of microprocessors, one or more microprocessors in conjunction with a digital signal processor core, or any other such configuration. In practice, the controller 112 includes processing logic that may be configured to carry out the functions, techniques, and processing tasks associated with the operation of the display system 100, as described in greater detail below. Furthermore, the steps of any method or algorithm described in connection with the embodiments disclosed herein may be embodied directly in hardware, in firmware, in a software module executed by the controller 112, or in any practical combination thereof.

The graphics module 114 generally represents the hardware, software, and/or firmware components configured to control the display and/or rendering of a navigational map on the display device 102 and perform additional tasks and/or functions described in greater detail below. In an exemplary embodiment, the graphics module 114 accesses one or more databases 116 suitably configured to support operations of the graphics module 114, as described below. In this regard, the database 116 may comprise a terrain database, a weather database, a flight plan database, an obstacle database, a navigational database, a geopolitical database, a terminal airspace database, a special use airspace database, or other information for rendering and/or displaying content on the display device 102, as described below. It will be appreciated that although FIG. 1 shows a single database 116 for purposes of explanation and ease of description, in practice, numerous databases will likely be present in a practical embodiment of the display system 100.

In the various embodiments described below, a touch screen keypad comprises keys arranged in a natural alphabetic sequence (for the reasons described above) and in groups and sub-clusters, as will be described below, such that the user can clearly differentiate the graphical objects (in this case letters).

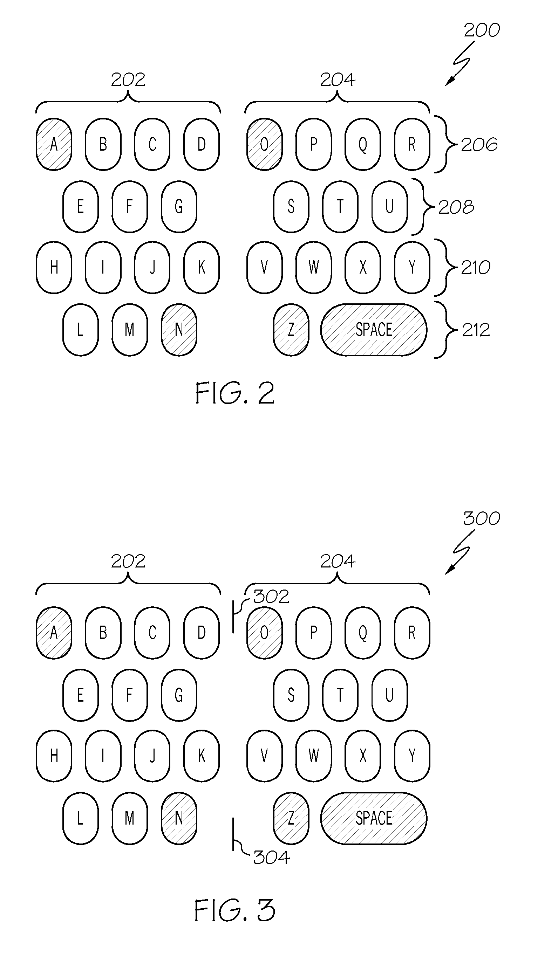

FIG. 2 illustrates an alphabetic keyboard in accordance with a first embodiment. It comprises first and second clusters 202 and 204, respectively, and sub-clusters or rows 206, 208 210, and 212. The letters in cluster 202 are arranged in natural alphabetic order and comprise, by row: A, B, C, D, in row 206; E, F, G, in row 208, H, I, J, K in row 210; and L, M, N in row 212. Similarly, letters in cluster 204 are arranged in alphabetic order and comprise, by row: O, P, Q, R, in row 206; S, T, U in row 208; V, W, X, Y in row 210; and Z in row 212. A SPACE key is also contained in cluster 204, row 212. As can be seen, the first and last letter keys in each cluster; i.e. A and N in cluster 202 and O and Z in group 204 are visually distinguished from the rest of the keys to further visually identify the clusters A through N and O through Z. The SPACE key is also visually distinguished.

FIGS. 3, 4, and 5 illustrate additional embodiments each of which is designed for increasing ease of use, greater speed, higher accuracy, and a reduction in the level of concentration required, especially during periods of high turbulence. For example, the keyboard 300 in FIG. 3 is provided with vertical cues or markers 302 and 304 thus providing a partition between cluster 202 (A-N) and cluster 204 (O-Z).

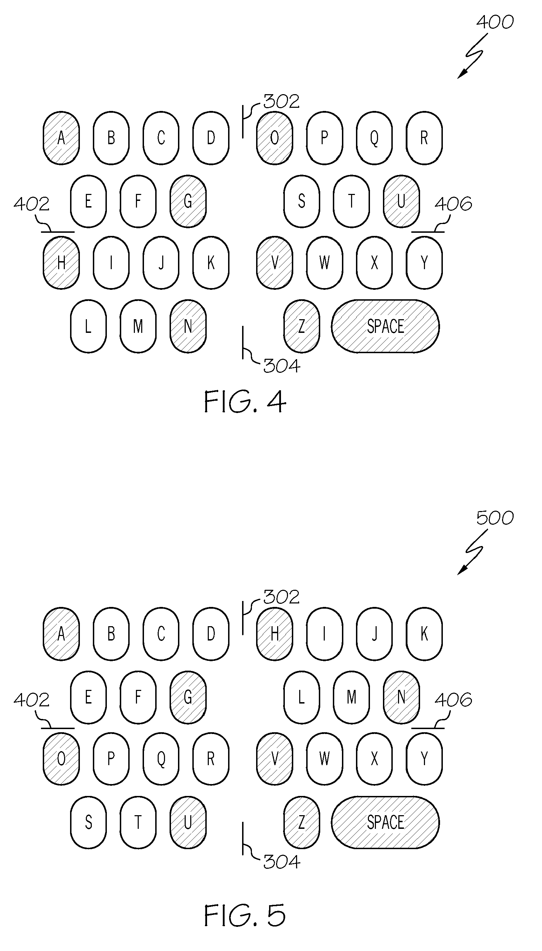

The keyboard 400 shown in FIG. 4 is provided with vertical markers 302 and 304, as was the case in FIG. 3, and also horizontal markers 402 and 406 thus producing quadrants QI (upper right), QII (upper left), QIII (lower right), and QIV (lower left). These comprise major clusters A-N and O-Z and minor, symmetrically oriented clusters A-G (in Q1), H-N (in Q2), O-U (in Q3) and V-Z (in Q4). The keyboard shown in FIG. 5 includes vertical markers 302 and 304 and horizontal markers 402 and 406; however, in this case, the major clusters A-N and O-Z are each comprised of first and second alphabetical sequential rows. Once again, the sub-clusters A-G (in Q1), H-N (in Q3), O-U (in Q2), and V-Z (in Q4) are symmetrically oriented.

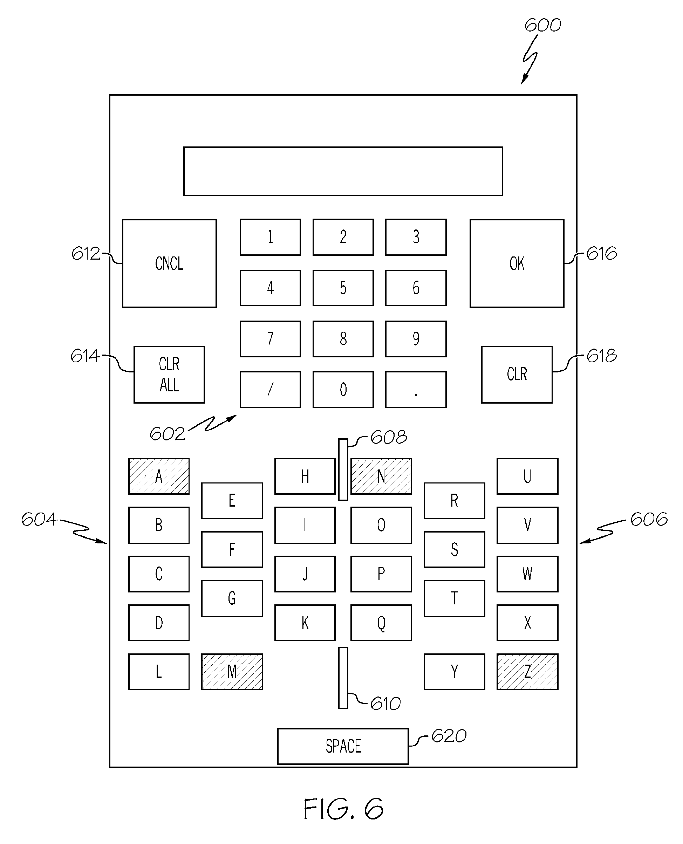

As stated previously, the well-known QWERTY keyboard requires a standard layout including rows comprised of at least ten keys resulting in button-widths as small as approximately nine millimeters. The touch inaccuracies associated with the narrow keys results in many errors (e.g. 4 to 5 percent). FIG. 6 illustrates a first embodiment of an alphanumeric keyboard 600 (e.g. a touch screen) keyboard incorporating some of the principals described above in connection with FIGS. 2-5. The keypad 600 comprises a standard numeric 4x4 keypad 602, including a "." key and a "/" key. The numeric keypad is located in an upper portion of keyboard 600. The lower portion of keyboard 600 comprises a sequential alphabetic keypad consisting of a first cluster of letters 604 (A-M) and a second cluster of letters 606 (N-Z) separated by vertical markers 608 and 610. The first cluster 604 is comprised of three columns (A-D, L); (E-G, M); and (H-K). The second cluster 606 is likewise comprised of three columns (N-Q); (R-T, Y); and (U-Z). As can be seen, the letters L and M form a bottom row in cluster 604, and Y and Z form a bottom row in cluster 606. Letters A, M, N, and Z visually distinguish from the rest of the letters. A group of control keys are positioned between the numeric keypad 602 and the sides of the keyboard; i.e. CNCL 612 (cancel) and CLR ALL 614 (clear all) on the left side and OK 616 and CLR 618 (clear) on the right side. A SPACE key 620 is located at the bottom of keyboard 600.

Because the letter keys in the keypad shown and described in connection with FIG. 6 are distributed in such a manner as to require minimal effort to locate a target character, it was found that the mean error rate was reduced to between 2 and 3 percent.

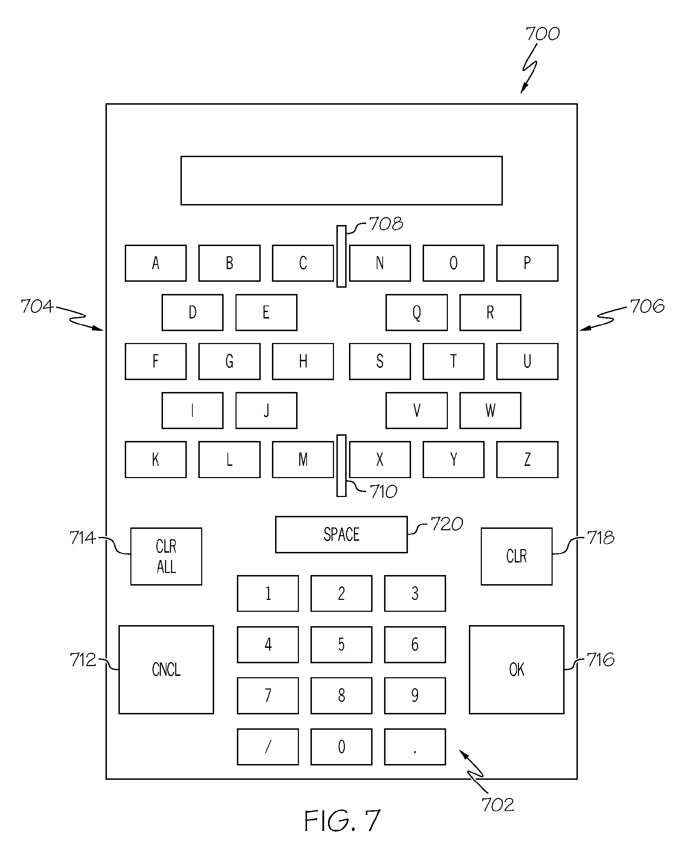

FIG. 7 illustrates a further embodiment of an alphanumeric keyboard 700 incorporating some of the principles described above in connection with FIGS. 2-5. The keyboard 700 comprises a standard numeric 4x4 matrix 702 of the type previously described in connection with FIG. 6. In this case, the numeric keypad 702 is located in the lower region of keyboard 700. Control keys 712, 714, 716, and 718, and SPACE key 720 are positioned around matrix 702; i.e. keys 712 and 714 on the left side of numeric matrix 702, keys 716 and 718 on the right side of numeric matrix 702, and the SPACE key 720 above numeric matrix 702.

Above SPACE key 720 and occupying the upper region of keypad 700 is the sequential alphabetic portion of the keypad comprised of a first cluster of letters 704 (A-M) and a second cluster of letters 706 (N-Z) separated by markers 708 and 710. The first cluster 704 is comprised of alternating rows of three and two letters; i.e. (A, B, C); (D, E); (F, G, H); (I, J); and (K, L, M). The second cluster is comprised of alternating rows of three and two letters; i.e. (N, O, P); (Q, R); (S, T, U); (V, W); and (X, Y, Z). By shifting the alphabetic keys to the upper portion of the screen and arranging it to comprise horizontally sequential rows in each cluster, a demonstrated improvement in speed (i.e. words-per-minute) was achieved. If desired, further improvements may be achieved by visually differentiating the letters A, M, N, and Z from the other letters to assist the user locate the markers and letters.

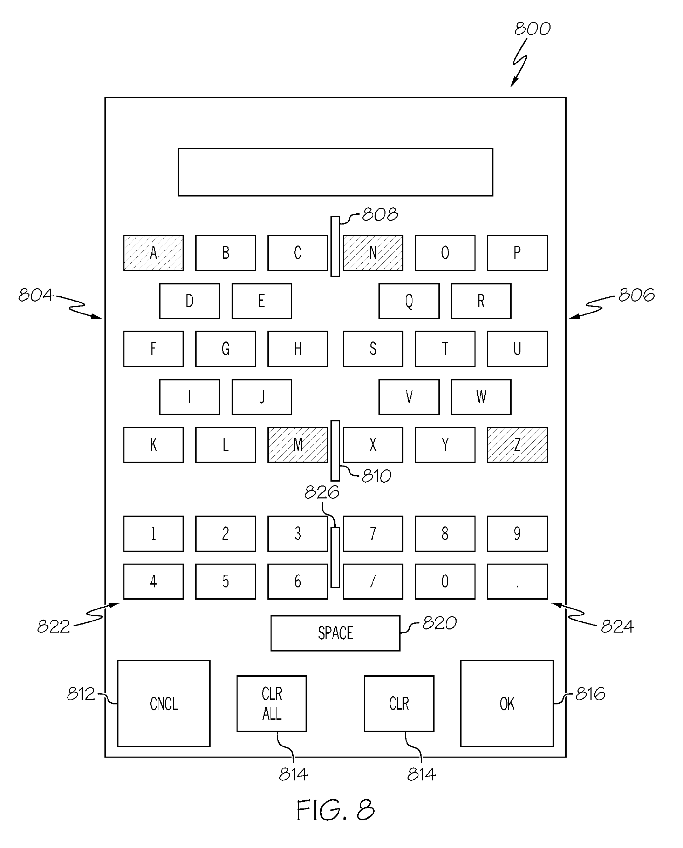

FIG. 8 illustrates a still further embodiment of an alphabetic keyboard 800. In this embodiment, the control keys 812, 814, 816, and 818 are grouped proximate the bottom of the keyboard. The upper alphabetic keypad is similar to that shown in FIG. 7, i.e. it comprises first and second alphabetically sequential clusters 804 and 806 separated by markers 808 and 810. The composition of clusters 804 and 806 is the same as that of clusters 704 and 706 in FIG. 7 except that letters A, M, N, and Z are visually differentiated (e.g. by color) from the rest of the letters.

The numeric keypad is comprised of first and second numeric clusters 822 and 824 separated by a marker 826. Cluster 822 comprises first and second numerically sequential rows: 1, 2, 3, and 4, 5, 6. Cluster 824 comprises a first, numerically sequential row 7, 8, 9 and a second row containing "/", 0, and ".". As can be seen, the numeric keyboard is positioned below the alphabet clusters 804 and 806; i.e. in an intermediate position on keypad 800 thus increasing the accessibility to these keys. Control keys 812, 814, 816, 818, and 818 are positioned below numeric keypad 824; i.e. near the bottom of the keyboard. Furthermore, this embodiment offers the advantage that both the alphabetic keys and the numeric keys are horizontally sequenced providing both visual and cognitive consistency. As a result, the error rate has been reduced to approximately one percent.

Thus, there has been provided a keyboard particularly suitable for use as a touch screen keypad in conjunction with an avionics system. The keyboard optimizes the visual characteristics, the cognitive characteristics, and the motor dynamics reducing the time it takes to locate a particular key and therefore increasing text entry speed. Cognitive and physical fatigue is reduced since total target acquisition time is reduced. The use of key clusters results in rapid learning, which translates into faster text entry speed and accuracy. This is due, in part, because the task of touching a key is divided into moving the finger towards a keypad sub-region and locating the desired key when the finger is sufficiently close to the screen above the sub-region; i.e. the sub-regions are located very quickly through cognitive alphabet-to- sub-region mapping. Finally, the larger sub-regions enable the user to not fully concentrate on the screen until a finger is sufficiently near the screen area corresponding to the specific sub-region. This reduces required concentration levels and therefore the overall visual and physical workload.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A virtual keyboard for display on an avionics touch screen display, comprising:
a first cluster of alphabetically sequential keys; and
a second cluster including alphabetically sequential keys, the second cluster separated from the first cluster.

2. The virtual keyboard of Claim 1 further comprising at least one visual marker between the first and second clusters.

3. The virtual keyboard of Claim 2 wherein the first and second clusters are disposed alongside each other and further comprising a vertically oriented visual marker for visually separating the first and second clusters.

4. The virtual keyboard of Claim 3 further comprising first and second horizontal markers for visually dividing each of the first and second clusters into first and second upper quadrants I and II, and first and second lower quadrants III and IV, respectively.

5. The virtual keyboard of Claim 4 wherein the first and second horizontal markers bisect each of the first and second clusters into upper and lower halves.

6. The virtual keyboard of Claim 3 wherein each of the first and second clusters comprise first, second, third, and fourth rows, each row containing at least one letter.

7. A virtual keyboard for display on an avionics touch screen display, the keyboard having a top section, a mid-section, and a bottom and including virtual alphabetic, numeric, and control keys, comprising:
first and second five-row, side-by-side clusters of virtual alphabetic keys;
first and second two-row, side-by-side clusters of virtual numeric keys, the first and second two-row groups located below the first and second five-row groups; and
a plurality of virtual control keys positioned below the first and second two-row groups of virtual numeric keys.

8. The virtual keyboard of Claim 7 wherein each of the rows in the five-row groups is arranged in horizontal alphabetic sequence.

9. The virtual keyboard of Claim 8 wherein the letters A, M, N, and Z are displayed in a first color and the remainder of the letters are arranged in a second color.

10. The virtual keyboard of Claim 8 wherein the rows in the five-row groups are alternately three letters and two letters in length.
